# EUROPEAN PATENT APPLICATION

(11) **EP 1 898 421 A1**
(43) Date of publication of application: **12.03.2008**
(21) Application number: 07270046.1
(22) Date of filing: 31.08.2007
(51) Int. Cl.: G11B 33/04, H01L 21/673, H01L 21/677

(54) **Disc turnover rack**

(30) Priority: 05.09.2006 GB 0617345
(71) Applicant: Pilkington Special Glass Limited, St Helens, Merseyside WA10 3TT (GB)
(72) Inventor: Hallows, Peter Morgan, Buckley, Flintshire CH7 3QJ (GB)
(74) Representative: Hamilton, Raymond

(57) **Abstract**

Glass disc turnover racks for simplifying the insertion of glass discs into a Laser Beam Recorder cartridge are described. The discs are first inserted into the turnover rack and subsequently transferred into the cartridge. The construction of the turnover rack makes it easier to insert the discs in the cartridge. Turnover racks according to the invention comprise a plurality of slots wherein one of the slots has a length that is less than the diameter of the glass disc. Methods of inserting glass discs into the cartridge and use of a glass disc turnover rack to insert glass discs into the cartridge are described.

## Description

The present invention relates to a glass disc turnover rack, a method of inserting glass discs into a storage barrel, and use of a glass disc turnover rack to insert glass discs into a storage barrel.

Optical storage discs, such as compact disc (CD) and digital versatile (or video) disc (DVD) are normally produced by stamping a transparent disc from molten polycarbonate. A metal "stamper" imprints the digital information onto the surface of the polycarbonate disc in the form of pits and lands. The information side of the disc is coated with a thin layer of metal, usually aluminium, before being coated with a protective lacquer.

The metal stamper is produced using well-known glass mastering and electroforming processes. The "glass mastering" process uses a glass disc as a substrate to hold the optical disc master while it is created and subsequently processed. The glass disc used has a greater diameter than the optical disc that will ultimately be produced, as this makes it easier to handle during processing. For example, the glass disc used in the production of a stamper for a standard 120mm diameter CD or DVD has a diameter of either 160mm or 180mm.

The type of glass used for the glass disc may be a conventional soda-lime-silica composition, such as float glass. Glass discs are produced specifically for the glass mastering process and are usually cut from sheets of thin float glass. One major surface of the glass disc is known as "the working surface", because it is used in the mastering process, and this surface is ground and polished until it is ultra smooth. Once the working surface has been prepared, the glass disc is washed in a clean room environment. The washed discs are inspected by eye for any surface imperfections using a shadowgraph technique, and as such, this usually takes place in a darkened area of the clean room. Any imperfections in the quality of the working surface, for example dust or scratches, will affect the quality of the optical disc master, and the resulting optical discs produced from such a master would be of poor quality. Glass discs with such imperfections are rejected, and may be re-cleaned or re-polished.

Each disc that passes the inspection is manually inserted into a specially designed cartridge, and when the cartridge is full, it is flushed with high purity filtered air before being sealed and packaged ready for shipping to customers. The glass discs can be reused many times, providing they are cleaned of contaminants and inspected for surface defects, before being re-loaded into the cartridge. The cartridge is a standard size, set by the optical disc mastering industry, and fits into a Laser Beam Recorder machine that does the actual mastering.

The cartridge is designed to accommodate the industry standard 160mm or 180mm diameter glass discs and is often referred to as a "storage barrel" because of its cylindrical shape. The storage barrel is made up of two hollow storage semi-cylinders, where each semi-cylinder has a number of vertical slots into which the glass discs fit. Typically, twenty glass discs can fit into a storage barrel, although different sizes are available. One of the semi-cylinders has two elongate retaining strips running down opposite sides of the rim. The retaining strips are curved inwards, following the curvature of the barrel. The glass discs are usually first inserted into the semi-cylinder that has the retaining strips. Once this semi-cylinder is full, the other semi-cylinder is connected to it, forming the final storage barrel. It is easier to connect the two semi-cylinders together when the discs are first inserted into the half that has the retaining strips. The retaining strips restrict the discs from moving during transit in the barrel, thereby preventing damage to the working face of each disc.

One type of storage barrel is disclosed in WO2006/097877A1. This particular type of storage barrel comprises two identical semi-cylinders, or housing parts, that fit together to form the barrel.

The problem with conventional storage barrels is that because of the way they are designed, it is difficult to insert the glass discs into the semi-cylinder without scratching the working face of the disc being inserted, or any of the other discs already in the semi-cylinder. Inserting the glass discs into the storage semi-cylinder is made especially difficult because it is usually carried out by hand in a darkened environment.

It is therefore an object of the present invention to provide a glass disc turnover rack into which glass discs can be easily inserted by hand, and from which the discs can easily be transferred to a storage semi-cylinder. It is a further object of the present invention to provide a method of inserting glass discs into a storage barrel using a turnover rack. The present invention also provides use of a glass disc turnover rack for inserting glass discs into a storage semi-cylinder.

According to a first aspect, the present invention provides a glass disc turnover rack comprising supporting means defining a plurality of slots, each slot being adapted to accommodate a glass disc on edge in a substantially vertical position, said supporting means being in contact with the edge of the discs and a sidewall having an upper surface wherein a substantially semicircular upper portion of the disc extends beyond the upper surface of the sidewall, characterised in that one of the slots has a length that is less than the diameter of the glass disc.

The length of the slot is defined as the straight line distance between the extreme ends of the slot.

Preferably the supporting means comprises a pair of opposing notches. Suitably the notches have a V-shaped profile.

Each slot may be 'U' shaped. The slot may have a non-uniform width, for example, the slot may be wider at the opening to act as a means of guiding the disc into the slot. Preferably, the slots are substantially parallel. When two or more discs are in the turnover rack, the major faces of each disc are substantially opposite and the discs are substantially parallel.

By sidewall, it is meant an elongate structural member. Suitably the slots are substantially perpendicular to the sidewall. In a most preferred embodiment the turnover rack has two sidewalls. Preferably the two sidewalls are substantially parallel. Suitably the separation of the two sidewalls is sufficient for the major face of the disc to fit between them. The upper surface of each sidewall may be used to rest part of the rim of a storage semi-cylinder thereon. The particular way that part of the rim of the storage semi-cylinder rests on the upper surfaces of the sidewall depends upon the exact construction of the rack, for example if the turnover rack has two sidewalls, part of the rim of the storage semi-cylinder may rest on the upper surface of both sidewalls or the upper surface of one of the sidewalls. If the turnover rack additionally has a front and/or rear wall, part of the rim of the storage rack may also rest on the upper surface of the front and/or rear wall. Preferably the upper surfaces of both side walls are in substantially the same plane. Suitably in use, the upper surface of each sidewall is substantially horizontal. Preferably the supporting means are part of a sidewall.

The turnover rack preferably comprises regularly spaced slots. Preferably the spacing of the slots corresponds substantially to the spacing of the slots in a storage semi-cylinder.

Preferably each slot has a length that is less than the diameter of the disc. Preferably the length of each slot is substantially the same.

The glass disc turnover rack may be modular and may comprise a number of separate racks mounted together. For example, each separate rack may support only one disc. The separate racks may be mounted on a pair of parallel rails or the like, such that the separation of the racks may be varied to make it easier to insert a glass disc therein. The separate racks may be brought together by sliding on the rails, such that the spacing of the supporting means of each separate rack corresponds substantially to the spacing of the slots in a semi-cylinder.

According to a second aspect the present invention provides a method of inserting a glass disc into a storage barrel comprising the steps of inserting the glass disc into a turnover rack according to the first aspect of the invention so that the glass disc is supported in the rack; placing the upper portion of the disc into a storage semi-cylinder so that the disc is located in the corresponding slot in the storage semi-cylinder, and transferring the disc from the turnover rack into the storage semi-cylinder.

Preferably, following the first step, the disc is substantially vertical. Suitably the method may be used to insert two or more glass discs into a storage barrel, wherein each glass disc has a working face, such that following the first step, the working face of the two or more glass discs are facing in substantially the same direction.

Preferably the step of transferring the disc from the turnover rack into the storage semi-cylinder comprises the step of inverting the turnover rack and the storage semi-cylinder together.

When the discs have been transferred to the storage semi-cylinder, the other semi-cylinder may be connected to it, forming the storage barrel.

According to a third aspect the present invention provides use of a glass disc turnover rack according to the first aspect of the invention, for inserting one or more glass disc into a storage semi-cylinder. It is preferred that in use, the turnover rack is placed on a flat surface such that each disc is supported substantially vertically. This makes it easier to insert each disc into the turnover rack because the disc may be held substantially vertical as it is inserted into the slot. In use, the discs may be supported substantially horizontal.

Embodiments of the present invention will now be described by way of example only with reference to the accompanying drawings, in which:
Figure 1 is a perspective view of a typical storage barrel used in an optical disc glass mastering machine, in which (a) is a representation of the complete barrel, (b) is a representation of both halves of the barrel and (c) is a plan view of the bottom half of the barrel;
Figure 2 is a perspective representation of a storage rack according to the present invention;
Figure 3 is a plan view of the rack shown in figure 2;
Figure 4 is a cross section of the rack parallel to the line A-A' viewed in the direction of B-B';
Figure 5 is a cross section of the rack parallel to the line B-B' viewed in the direction of A-A'; and
Figure 6 is a flow chart showing a method of using the turnover rack.

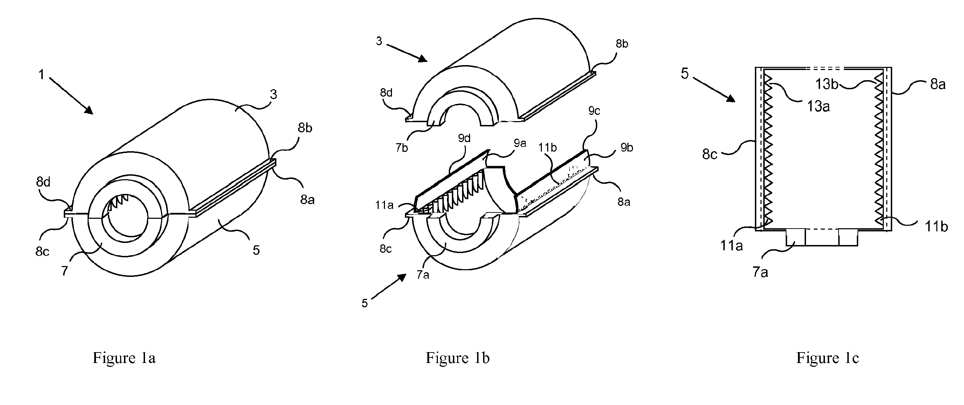

Figure 1 shows a conventional storage barrel 1 consisting of two hollow storage semi-cylinders 3 and 5. The semi-cylinders 3 and 5 engage and discs slotted inside the barrel are protected from damage whilst in transit. The barrel 1 is a standard size to fit into an optical disc mastering machine. The collar 7 is used to fit the barrel into the mastering machine in the correct orientation and is split into two halves, 7a and 7b. Running along the length of the rim on each storage semi-cylinder are flanges 8a, 8b, 8c and 8d. The storage semi-cylinder 5 has retaining strips 9a and 9b running down the length of each side which curve inwardly and follow the radius of curvature of the barrel. In use, the outer surfaces of the retaining strips face the inner surface of the storage semi-cylinder 3. There are no retaining strips on storage semi-cylinder 3. The retaining strips 9a and 9b are able to exert a compressive force on the edge of the discs and prevent excessive movement of the discs when being transported in the storage barrel. The retaining strips 9a and 9b impede insertion of discs into storage semi-cylinder 5.

On the inside surface of each storage semi-cylinder, running parallel to the ends thereof, is a row of regularly spaced protrusions, or "fins", 11a and 11b. The fins extend inwardly from the edge by about 5mm. A pair of fins forms a guiding channel and an opposing pair of channels forms a slot into which a disc can be inserted. For example, a slot for a disc in storage semi-cylinder 5 is formed between the two channels 13a and 13b. This slot has a length that is slightly longer than the diameter of the glass disc. There is a corresponding slot in storage semi-cylinder 3. Typically there are twenty slots in a storage barrel. In plan view, the rim of each storage semi-cylinder 3 and 5 is rectangular.

The retaining strips 9a and 9b make it difficult to insert a glass disc into the storage semi-cylinder 5 because the separation of the upper edges 9c and 9d of the retaining strips is less than the diameter of the disc. To insert a glass disc into the semi-cylinder 5, the retaining strips 9a and 9b must be urged apart. When a disc is inserted into a slot in storage semi-cylinder 5, the upper edges 9c and 9d are located above the centre of gravity of the disc. The upper edges impede insertion of the disc into the slot. In order to insert a disc into a slot in semi-cylinder 5, the disc must be held above its centre of gravity, which makes manoeuvring the disc into the appropriate slot difficult.

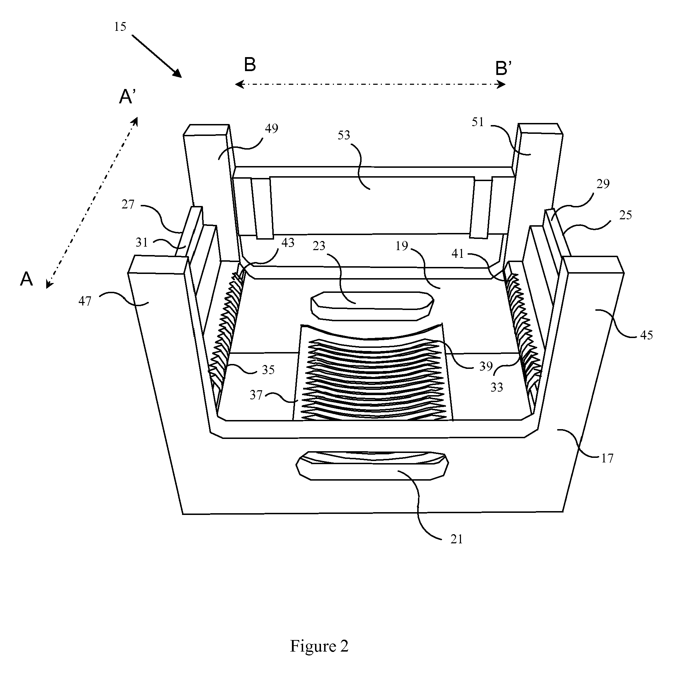

Figure 2 shows a perspective view of a turnover rack according to the present invention. The turnover rack 15 has a front wall 17 and a rear wall 19. Opening 21 in front wall 17 and opening 23 in rear wall 19 are used as handles to pick up the rack. The front wall 17 and rear wall 19 are connected by sidewalls 25 and 27. The front and rear walls 17 and 19 are substantially parallel, as are the side walls 25 and 27, such that the turnover rack has a generally rectangular construction. The upper surfaces 29 and 31 of sidewalls 25 and 27 are substantially flat. The upper surfaces 29 and 31 may not be flat, provided that when the rim of a storage semi-cylinder rests on the upper surfaces 29 and 31, the rim is substantially horizontal. The sidewalls are spaced so that the major face of a glass disc can fit between them. The lower portion of sidewall 25 has supporting means in the form of a row of V-shaped notches 33. There is a corresponding row of notches 35 on the lower portion of sidewall 27. Each notch is substantially the same and has a V-shaped profile. The faces of each notch subtend an angle of about 60°. By being V-shaped, the notches do not substantially contact either major face of the disc. The row of notches 33 (35) is inboard of, and lower than, the upper surface 29 (31). Connected between the front wall 17 and rear wall 19 is a base portion 37. The base portion 37 has supporting means in the form of a number of curved grooves 39, in this particular case there are twenty, to support each of the glass discs. The grooves 39 are sufficiently wide such that the disc can sit in the groove without being damaged. Each grove supports a single disc and for each groove 39 there is a corresponding pair of notches 41, 43. The groove and pair of notches define a slot into which the disc may be inserted. The length of the slot is defined as the straight line distance between the two notches. Preferably each slot has a length that is less than the diameter of the disc. Preferably the length of each slot is substantially the same. The walls of the slot must not contact the major face of the disc, such that the area of the working face used in the glass mastering process becomes compromised. The notches are all the same length and are vertical, although the notches may be curved. Each pair of notches 41, 43 keeps each disc separated so that the working face of each disc is not contacted. The groove 39 is wide enough to easily insert the disc into, and as such the pair of notches 41, 43 are able to support the disc so that it is substantially vertical. The pair of notches 41, 43 and each groove 39 are in substantially the same plane, such that when a disc is supported by groove 39, the disc is substantially vertical and parallel to the front and rear walls 17, 19. In this particular example the spacing of each pair of notches 41, 43 is less than the diameter of a glass disc. Each groove and pair of notches could be part of a continuous slot. The pair of notches 41, 43 could support the disc, especially if the notches were curved. If the notches supported the disc, there would be no need for base portion to have grooves to support the disc and the discs could simply stand on the base portion 37, or the base portion 37 could be removed. Removing the base portion 37 would not affect the slot length because the extreme ends of the slot are still defined by the notches 41, 43. Removal of the base portion 37 would increase the likelihood of damage to the lower edge of the discs. The supporting means must not contact the working face of the disc to the extent that the subsequent optical disc master would be compromised, for example by scratching.

The vertical distance D_{gu1}, between the lowest point on groove 39 and the upper surface 29 is substantially the same as the vertical distance D_{gu2}, between the lowest point on groove 39 and the upper surface 31. The distances D_{gu1} and D_{gu2} are substantially the radius of the disc, typically 5-10% greater.

The front wall 17 and rear wall 19 are "U" shaped. The upper portions 45, 47 of the front wall 17 and the upper portions 49, 51 of rear wall 19 are spaced such that the rim of a storage semi-cylinder is able to sit on the upper surfaces 29, 31. The upper portions 45, 47, 49 and 51 act as guides for the storage semi-cylinder to ensure that the slots in the semi-cylinder align with the corresponding groove and pair of notches in the rack. There is a cross member 53 between upper portion 49 and 51 which prevents the storage semi-cylinder from being placed on the rack the wrong way round by blocking the collar 7a,7b. By "wrong way" it is meant that the orientation of discs in the barrel is not the way expected by the mastering machine.

Suitable materials for constructing the rack are PVC and nylon and combinations thereof. For example, each row of notches and the base portion could be made from "nylon 66", and the sidewalls and the front and rear wall could be made from PVC. Each row of notches may be connected to the sidewall by screws.

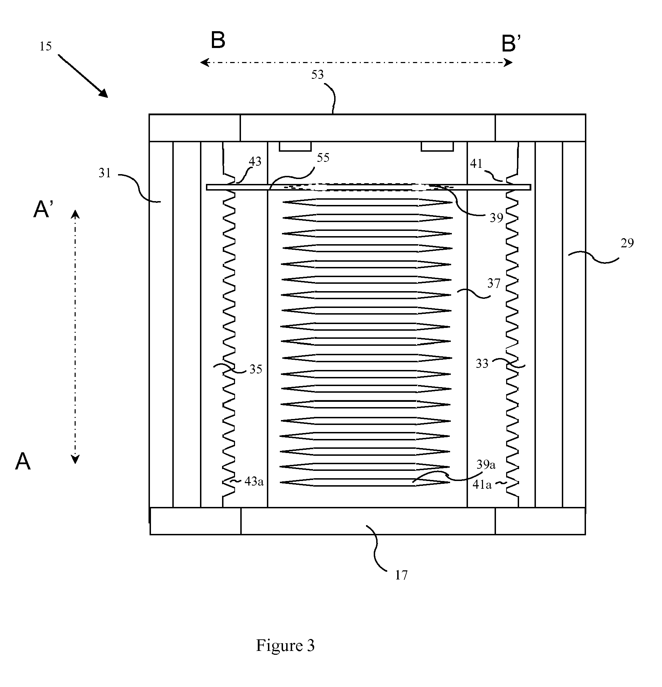

Figure 3 shows a plan view of storage rack 15 with a glass disc 55 inserted in the rack. The glass disc is 160mm diameter and has a thickness of about 1.6mm. The working face of the disc is facing the front wall 17. The disc 55 is being supported by groove 39 and is being kept in a substantially vertical position by notches 41, 43. For clarity, another groove 39a and corresponding pair of notches 41a and 43a have been shown. The angle subtended by notches 41a and 43a is about 60°.

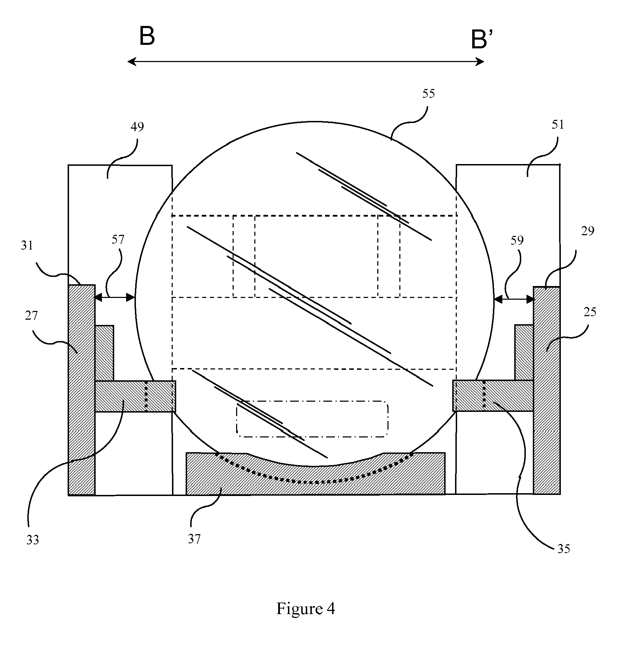

Figure 4 shows a cross sectional view of the turnover rack shown in figure 2, viewed in the direction of the line A-A'. The base portion 37 is supporting the glass disc 55. The major face of the glass disc 55 fits in between the sidewalls 25, 27. The spacing between the notches is less than the diameter of the disc. In use, each notch is substantially vertical. When one or more disc is in the rack, there is a space 57, 59 between the sidewall and the edge of the one or more disc that is sufficient for a retaining strip 9a, 9b of a storage semi-cylinder to fit into. The upper portion of the disc extending beyond the upper surfaces 29 and 31 is substantially semi-circular.

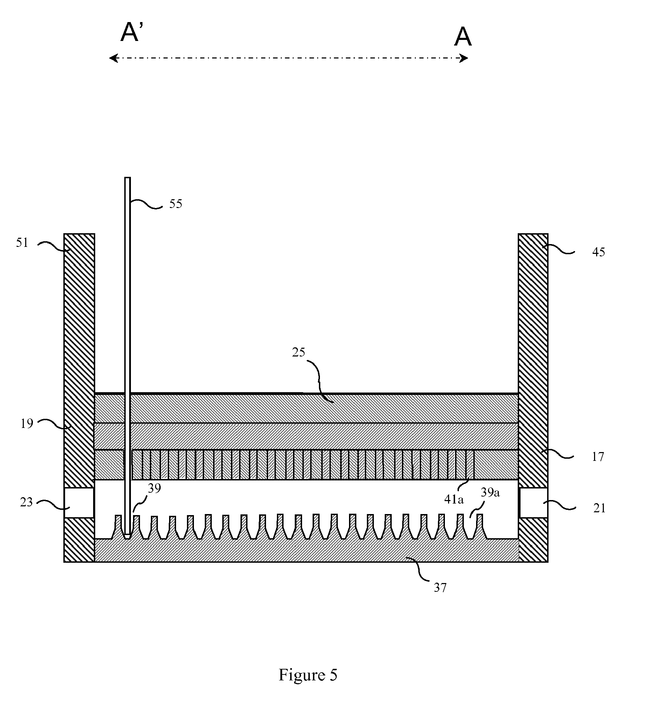

Figure 5 shows a side view of the turnover rack shown in figure 2, viewed in the direction of the line B-B'. The working face of the glass disc 55 is facing the front wall 17.

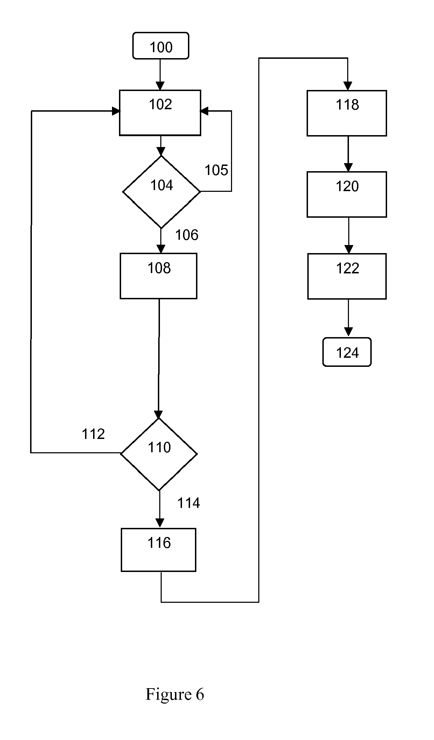

Figure 6 is a flowchart indicating the steps taken when using the turnover rack to insert glass discs into a storage barrel. To illustrate the method more clearly, the conventional method of inserting glass discs will first be described.

To insert a disc in the storage semi-cylinder 5, the disc is held at the edge, usually between the fingers of both hands, taking care not to touch either major face. It is usual to insert the glass discs into the half of the barrel with the retaining strips because of the way the two storage semi-cylinders 3 and 5 engage to form the storage barrel.

Firstly, the storage semi-cylinder 5 is positioned so that the fins 11a and 11b are substantially vertical and the rim is substantially horizontal. Due to the location of the slots and the retaining strips 9a and 9b, to insert the glass disc into a slot, the disc must be held almost vertically and about the edge, above the centre of gravity of the disc. The retaining strips impede insertion of the disc into the storage semi-cylinder. Typically the disc is held about the edge of the upper half of the disc. Holding the disc in this way makes it difficult to control the movement of the disc, and any slight movement of the hands causes a larger movement in the lower half of the disc. As the disc is inserted into a slot in the storage semi-cylinder 5, the two retaining strips 9a and 9b must be urged apart. The separation of the top of the retaining strips is less than the diameter of the disc and as such, impedes insertion of the disc into the storage semi-cylinder. This makes controlling the insertion of the disc into the slot difficult, especially when there is a disc already in the rack. Usually the disc is inserted into a vacant slot at the rear of the semi-cylinder and the working faces of all the discs must face in the same direction, unless the mastering machine is designed to accept a different configuration. Discs are inserted into the slots until the storage semi-cylinder is full. When there is a disc in the semi-cylinder, it is possible that the disc being inserted could touch the working face of the disc. This may damage the highly polished working face and consequently the disc must be removed as it may not be acceptable for use in the mastering process.

Using the turnover rack, it is much easier to insert the discs into the semi-cylinder. The turnover rack does not have any retaining strips to impede insertion of the discs, because the rack is only used to transfer the discs to the storage barrel. The distance of the upper surfaces 29, 31 to the bottom of each groove 39 is about the radius of the disc, such that when the disc is supported in the rack, about half of the disc extends above the upper surfaces 29 and 31 of the sidewalls. The position of the upper surfaces, the notches and the grooves are such that the glass disc can be held about the edge much closer to the centre of gravity of the disc, which increases the stability of the disc as it is being lowered into the rack. The turnover rack has no retaining strips, which means that no extra force is required to urge the retaining strips apart, thereby increasing stability. Additionally, the distances D_{gu1} and D_{gu2} are such that the upper surfaces 29, 31 do not impede manual insertion of the disc. That is, it is possible to hold the disc between the fingers of both hands about the opposite sides of the edge of the disc. The turnover rack does not need retaining strips because it is usually not used to transport the glass discs. It is much easier to insert the discs into the turnover rack than directly into a storage semi-cylinder. Glass discs could be stored in the rack in a clean room environment and subsequently transferred to a storage barrel when required.

The sequence of steps begins at step 100. In step 100, an empty turnover rack 15 is placed onto a flat surface.

In step 102, a freshly cleaned glass disc is selected. The disc has a diameter between about 160mm and 180mm, and a thickness of about 1.6mm.

Step 104 is a decision step where it is determined if the disc is acceptable for use in the mastering machine, and therefore acceptable for packing into a storage barrel, the disc is inspected by eye using a shadowgraph technique. This technique identifies any surface imperfections on the working surface of the disc. The shadowgraph inspection usually takes place in the dark. If the disc is not acceptable then path 105 is followed. If the disc is acceptable, path 106 is followed.

In step 108 the disc is inserted into the turnover rack. The disc is held about the edge between the fingers of both hands. The disc can be held vertically, with both hands level about the diameter of the disc. The working face of each disc should be facing the same direction when all the discs are in the turnover rack. The disc is lowered into the rack, between the two opposing notches and down into the groove in the base portion.

Step 110 is a decision step. If the turnover rack is not full, path 112 is followed and further discs are inserted into the rack. If the turnover rack is full, path 114 is followed.

In step 116, the rim of storage semi-cylinder 5 is placed onto the upper surfaces 29 and 31 so that the discs are between the fins of the storage semi-cylinder, that is, the discs are in the corresponding slots in the storage semi-cylinder. The storage semi-cylinder is guided by the upper portions 45, 47, 49 and 51 onto the upper surfaces 29 and 31. The cross member 53 prevents the storage semi-cylinder from being located the wrong way round. If the distances D_{gu1} and D_{gu2} are much greater than the radius of the disc, then the disc may not fit into the corresponding slot in the storage semi-cylinder when the storage semi-cylinder is placed on the upper surfaces 29 and 31. When the rim of the storage semi-cylinder rests on the upper surfaces 29, 31, the retaining strips 9a, 9b fit in the space 57, 59.

In step 118, with the storage semi-cylinder resting on the upper surfaces 29 and 31, the turnover rack and the storage semi-cylinder are turned over by 180° so that the discs are transferred into the storage semi-cylinder under the action of gravity. Because the distances D_{gu1} and D_{gu2} are about the radius of the disc, the discs do not fall too far when the turnover rack and the storage semi-cylinder are turned over. If the distances D_{gu1} and D_{gu2} are much greater than the radius of the disc, then the discs may not fit into the slot in the storage semi-cylinder when it is placed on the upper surfaces 29 and 31. Also, the discs may be damaged as they fall into the storage semi-cylinder when the turnover rack and the storage semi-cylinder are turned over.

The turnover rack is lifted away from the upper surfaces 29 and 31. The base portion 37 may be used at a handle for this purpose. When the turnover rack has been removed, the storage semi-cylinder is now loaded with glass discs.

In step 120, the other storage semi-cylinder 3 is engaged with the storage semi-cylinder 5 to form the storage barrel.

In step 122, the storage barrel is purged with high purity air and packaged ready use shipping to customers.

Step 124 signifies the end of the method.

## Claims

1. A glass disc turnover rack (15) comprising supporting means defining a plurality of slots, each slot being adapted to accommodate a glass disc (55) on edge in a substantially vertical position, said supporting means being in contact with the edge of the discs, and a sidewall (25, 27) having an upper surface (29, 31), wherein a substantially semicircular upper portion of the disc extends beyond the upper surface of the sidewall, **characterised in that** one of the slots has a length that is less than the diameter of the glass disc.

2. A glass disc turnover rack according to claim 1, wherein the supporting means comprises a pair of opposing notches (33, 35).

3. A glass disc turnover rack according to claim 2, wherein each notch has a V-shaped profile.

4. A glass disc turnover rack according to any of the preceding claims, wherein the slots are substantially parallel.

5. A glass disc turnover rack according to any of the preceding claims, wherein the upper surface of the sidewall may be used to rest part of the rim of a storage semi-cylinder thereon.

6. A glass disc turnover rack according to any of the preceding claims wherein the supporting means is part of the sidewall.

7. A glass disc turnover rack according to any of the preceding claims wherein the slots are regularly spaced.

8. A glass disc turnover rack according to claim 7 wherein the spacing of the slots corresponds substantially to the spacing of the slots in a storage semi-cylinder (3, 5).

9. A glass disc turnover rack according to any of the preceding claims, for use with glass discs of diameter between 160mm and 180mm.

10. A glass disc turnover rack according to any of the preceding claims, for use with glass discs of thickness about 1.6mm.

11. A glass disc turnover rack according to any of the preceding claims wherein the length of each slot is less than the diameter of the glass disc.

12. A glass disc turnover rack according to claim 11 wherein the length of each slot is substantially the same.

13. A method of inserting a glass disc (55) into a storage barrel (1) comprising the steps of
inserting the glass disc into a turnover rack (15) according to any of the preceding claims;
placing the upper portion of the disc into a storage semi-cylinder (3, 5) so that the disc is located in the corresponding slot in the storage semi-cylinder; and
transferring the disc from the turnover rack into the storage semi-cylinder.

14. A method of inserting one or more glass discs into a storage barrel according to claim 13, wherein following the first step, the disc is substantially vertical.

15. A method of inserting two or more glass discs into a storage barrel according to either of claims 13 or 14, each disc having a working face, wherein following the first step, the working face of the two or more glass discs are facing in substantially the same direction.

16. A method of inserting a glass disc into a storage semi-barrel according to any of the claims 13 to 15, wherein the step of transferring the disc from the turnover rack into the storage semi-cylinder comprises the step of inverting the turnover rack and the storage semi-cylinder together.

17. Use of a glass disc turnover rack according to any of claims 1 to 12, for inserting one or more glass disc into a storage semi-cylinder (3, 5).
